(19) **Europäisches Patentamt / European Patent Office / Office européen des brevets**

(11) **EP 3 327 951 A1**

(12) **EUROPEAN PATENT APPLICATION**
published in accordance with Art. 153(4) EPC

(43) Date of publication:
**30.05.2018 Bulletin 2018/22**

(21) Application number: **16836505.4**

(22) Date of filing: **08.07.2016**

(51) Int Cl.:
*H04B 7/06* (2006.01)          *H04L 1/06* (2006.01)

(86) International application number:
**PCT/CN2016/089416**

(87) International publication number:
**WO 2017/028641 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.08.2015  CN 201510501769**

(71) Applicant: **China Academy of Telecommunications Technology
Hai Dian District
Beijing 100191 (CN)**

(72) Inventors:
• **LI, Hui
Beijing 100191 (CN)**
• **GAO, Qiubin
Beijing 100191 (CN)**
• **CHEN, Runhua
Beijing 100191 (CN)**
• **CHEN, Wenhong
Beijing 100191 (CN)**
• **TAMRAKAR, Rakesh
Beijing 100191 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **INFORMATION FEEDBACK METHOD, INFORMATION FEEDBACK DEVICE AND TERMINAL**

(57)    The present disclosure relates to the field of communication technology, and provides an information feedback method, an information feedback device and a UE. The information feedback method includes steps of: acquiring PMIs of multiple-level component precoding matrices of a precoding matrix for downlink data transmission; and feeding back the PMI of each of the multiple-level component precoding matrices of the precoding matrix to a base station individually, or feeding back the jointly encoded PMIs, each of which is the PMI of each of the multiple-level component precoding matrices of the precoding matrix, to the base station.

```
┌─────────────────────────────────────┐
│ acquiring PMIs of multiple-level     │  51
│ precoding matrices of a precoding    │
│ matrix for downlink data             │
│ transmission                         │
└─────────────────────────────────────┘
                  │
                  ▼
┌─────────────────────────────────────┐
│ feeding back the PMI of each of the  │  52
│ multiple-level precoding matrices of │
│ the precoding matrix to a base       │
│ station, or feeding back the PMI of  │
│ each of the multiple-level precoding │
│ matrices of the precoding matrix to  │
│ the base station after joint         │
│ encoding                             │
└─────────────────────────────────────┘
```

Fig.5

EP 3 327 951 A1

Printed by Jouve, 75001 PARIS (FR)

## Description

### CROSS-REFERENCE TO RELATED APPLICATION

The present disclosure claims a priority of the Chinese Patent Application No.201510501769.6 filed on August 14, 2015, which is incorporated herein by reference in its entirety.

### TECHNICAL FIELD

The present disclosure relates to the field of communication technology, in particular to an information feedback method, an information feedback device and a User Equipment (UE).

### BACKGROUND

Along with the rapid development of mobile Internet, service data traffic grows dramatically, which is putting enormous strain on an existing wireless network. For a currently mainstream communication system (e.g., a Long Term Evolution (LTE) system), it is still the most important object to increase system capacity and reduce interference.

As compared with a traditional two-dimensional (2D) Multiple Input Multiple Output (MIMO) technology, for a three-dimensional (3D) MIMO technology, an additional available dimension is provided on the basis of a vertical dimension. Chanel information in this dimension may be utilized, so as to effectively inhibit inter-cell interference, thereby to increase an average throughput of an edge user or even the entire cell.

For a current Frequency Division Duplex (FDD) LTE system, in order to acquire downlink Channel State Information (CSI), a downlink reference signal, e.g., Channel State Information-Reference Signal (CSI-RS) or Cell-specific Reference Signal (CRS), needs to be used by a UE to estimate a downlink channel and feed back a Rank Indicator (RI), a Precoding Matrix Indicator (PMI) and a Channel Quality Indicator (CQI) to an evolved NodeB (eNB, i.e., a base station). The UE may report the CSI periodically or non-periodically. In the case of reporting the CSI periodically, the CSI may have a length not greater than 11 bits, so the CSI is reported coarsely.

For the periodic feedback in the current LTE system, 8-antennae codebooks are merely taken into consideration. As compared with the 8-antennae codebooks, the number of the 3D MIMO codebooks increases significantly. Hence, in the case of reporting the CSI, the feedback overhead for the UE increases significantly too. In other words, it is difficult for a conventional feedback mode to support the feedback of the codebooks in a larger amount. There is currently no scheme about a feedback mode with respect to the 3D MIMO codebooks in the industry.

## SUMMARY

(1) Technical problem to be solved

An object of the present disclosure is to provide an information feedback method, an information feedback device and a UE capable of supporting a higher codebook feedback load.

(2) Technical solution

In one aspect, the present disclosure provides in some embodiments an information feedback method, including steps of: acquiring PMIs of multiple-level component precoding matrices of a precoding matrix for downlink data transmission; and feeding back the PMI of each of the multiple-level component precoding matrices of the precoding matrix to a base station individually, or feeding back the jointly encoded PMIs, each of which is the PMI of each of the multiple-level component precoding matrices of the precoding matrix, to the base station.

In a possible embodiment of the present disclosure, the step of acquiring the PMIs of the multiple-level component precoding matrices of the precoding matrix for the downlink data transmission includes: acquiring a dimension indication of a first-level component precoding matrix of the precoding matrix for the downlink data transmission; acquiring the PMI of the first-level component precoding matrix in accordance with the dimension indication of the first-level component precoding matrix; and acquiring the PMIs of a second-level to an $N^{th}$-level component precoding matrices of the precoding matrix. Each of the second-level to the $N^{th}$-level component precoding matrices is acquired in accordance with a previous-level component precoding matrix, and N is an integer greater than 2.

In a possible embodiment of the present disclosure, the step of acquiring the PMI of the first-level component precoding matrix in accordance with the dimension indication of the first-level component precoding matrix includes acquiring a first PMI PMI1 of the first-level component precoding matrix, or acquiring a horizontal-dimension PMI H-PMI1 and a vertical-dimension PMI V-PMI1 of the first-level component precoding matrix.

In a possible embodiment of the present disclosure, the step of feeding back the PMI of each of the multiple-level component precoding matrices of the precoding matrix, to the base station includes feeding back at least one of a horizontal-dimension PMI and a vertical-dimension PMI of each of the multiple-level component precoding matrices and the other PMI to the base station after they are jointly encoded.

In a possible embodiment of the present disclosure, the step of feeding back the PMI of each of the multiple-level component precoding matrices to the base station or feeding back the PMI of each of the multiple-level component precoding matrices to the base station after they are jointly encoded includes feeding back the first PMI PMI1 of the first-level component precoding matrix and PMIs PMI2 to PMIN of the second-level to the N$^{th}$-level component precoding matrices to the base station independently, or feeding back the horizontal-dimension PMI H-PMI1 and the vertical-dimension PMI V-PMI1 of the first-level component precoding matrix and the PMIs PMI2 to PMIN of the second-level to the N$^{th}$-level component precoding matrices to the base station independently, or feeding back at least two of the first PMI PMI1 of the first-level component precoding matrix and PMIs PMI2 to PMIN of the second-level to the N$^{th}$-level component precoding matrices to the base station after they are jointly encoded, or feeding back at least two of the horizontal-dimension PMI H-PMI1 and the vertical-dimension PMI V-PMI1 of the first-level component precoding matrix and the PMIs PMI2 to PMIN of the second-level to the N$^{th}$-level component precoding matrices to the base station after they are jointly encoded. In a possible embodiment of the present disclosure, the information feedback method further includes feeding back an RI for determining the precoding matrix to the base station independently, or feeding back a CQI for determining the precoding matrix to the base station independently, or feeding back the RI for determining the precoding matrix that is jointly encoded with the first PMI PMI1 or the vertical-dimension PMI V-PMI1 of the first-level component precoding matrix, to the base station, or feeding back the CQI for determining the precoding matrix that is jointly encoded with at least one of the horizontal-dimension PMI1 of the first-level component precoding matrix and the PMI2 to PMIN of the second-level to the N$^{th}$-level component precoding matrices to the base station after they are jointly encoded.

In a possible embodiment of the present disclosure, a feedback period of the RI is substantially greater than or equal to a feedback period of the PMI1, the H-PMI1 or the V-PMI1, the feedback period of the PMI1 is substantially greater than or equal to a feedback period of the PMI2 to PMIN, a feedback period of the PMI2 is substantially identical to a feedback period of the CQI, and the feedback period of the V-PMI1 is substantially greater than or equal to the feedback period of the H-PMI1.

In a possible embodiment of the present disclosure, T-RI=MRI*H*Np and T-MPI1=H*Np, where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

In a possible embodiment of the present disclosure, the RI has a feedback priority level greater than the PMI1, the PMI1 has a feedback priority level greater than the PMI2 to the PMIN and greater than the CQI, and the V-PMI1 has a feedback priority level greater than the H-PMI1 and the PMI2 to the PMIN.

In a possible embodiment of the present disclosure, in the case that an identical UE needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station. The first base station is a base station having an MIMO antenna array with controllable horizontal dimension antennas, and the second base station is a base station having an MIMO antenna array with both controllable horizontal and vertical antennas.

In another aspect, the present disclosure provides in some embodiments an information feedback device, including: an acquisition module configured to acquire PMIs of multiple-level component precoding matrices of a precoding matrix for downlink data transmission; and a feedback module configured to feed back the PMI of each of the multiple-level component precoding matrices of the precoding matrix to a base station, or feed back the PMI of each of the multiple-level component precoding matrices of the precoding matrix, to the base station.

In a possible embodiment of the present disclosure, the acquisition module includes: a first acquisition unit configured to acquire a dimension indication of a first-level component precoding matrix of the precoding matrix for the downlink data transmission; a second acquisition unit configured to acquire the PMI of the first-level component precoding matrix in accordance with the dimension indication of the first-level component precoding matrix; and a third acquisition unit configured to acquire the PMIs of a second-level to an N$^{th}$-level component precoding matrices of the precoding matrix. Each of the second-level to the N$^{th}$-level component precoding matrices is acquired in accordance with a previous-level component precoding matrix, and N is an integer greater than 2.

In a possible embodiment of the present disclosure, the second acquisition unit is further configured to acquire a first PMI PMI1 of the first-level component precoding matrix, or acquire a horizontal-dimension PMI H-PMI1 and a vertical-dimension PMI V-PMI1 of the first-level component precoding matrix.

In a possible embodiment of the present disclosure, the feedback module is further configured to feed back at least one of a horizontal-dimension PMI and a vertical-dimension PMI of each of the multiple-level component precoding matrices and the other PMI to the base station after they are jointly encoded.

In a possible embodiment of the present disclosure, the feedback module includes: a first independent feedback unit configured to feed back the first PMI PMI1 of the first-level component precoding matrix and PMIs PMI2 to PMIN of the second-level to the $N^{th}$-level component precoding matrices to the base station, or feed back the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station; or a first joint feedback unit configured to feed back at least two of the first PMI PMI1 of the first-level component precoding matrix and PMIs PMI2 to PMIN of the second-level to the $N^{th}$-level component precoding matrices to the base station after they are jointly encoded, or feed back at least two of the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station after they are jointly encoded. In a possible embodiment of the present disclosure, the feedback module further includes: a second independent feedback unit configured to feed back an RI for determining the precoding matrix to the base station independently, or feed back a CQI for determining the precoding matrix to the base station independently; or a second joint feedback unit configured to feed back the RI for determining the precoding matrix that is jointly encoded with the first PMI PMI1 or the vertical-dimension PMI V-PMI1 of the first-level component precoding matrix, to the base station, or feed back the CQI for determining the precoding matrix that is jointly encoded with at least one of the horizontal-dimension PMI1 of the first-level component precoding matrix and the PMI2 to PMIN of the second-level to the $N^{th}$-level component precoding matrices to the base station after they are jointly encoded. In a possible embodiment of the present disclosure, a feedback period of the RI is substantially greater than or equal to a feedback period of the PMI1, the H-PMI1 or the V-PMI1, the feedback period of the PMI1 is substantially greater than or equal to a feedback period of the PMI2 to PMIN, a feedback period of the PMI2 is substantially identical to a feedback period of the CQI, and the feedback period of the V-PMI1 is substantially greater than or equal to the feedback period of the H-PMI1.

In a possible embodiment of the present disclosure, T-RI=MRI*H*Np and T-MPI1=H*Np, where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

In a possible embodiment of the present disclosure, the RI has a feedback priority level greater than the PMI1, the PMI1 has a feedback priority level greater than the PMI2 to the PMIN and greater than the CQI, and the V-PMI1 has a feedback priority level greater than the H-PMI1 and the PMI2 to the PMIN.

In a possible embodiment of the present disclosure, in the case that an identical UE needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station. The first base station is a base station having an MIMO antenna array with controllable horizontal dimension antennas, and the second base station is a base station having an MIMO antenna array with both controllable horizontal and vertical antennas.

In yet another aspect, the present disclosure provides in some embodiments a UE, including a processor and a memory connected to the processor via a bus interface and configured to store therein programs and data for the operation of the processor. The processor is configured to call and execute the programs and data stored in the memory, so as to: acquire PMIs of multiple-level component precoding matrices of a precoding matrix for downlink data transmission; and feed back the PMI of each of the multiple-level component precoding matrices of the precoding matrix to a base station, or feed back the PMI of each of the multiple-level component precoding matrices of the precoding matrix, to the base station.

(3) Beneficial effect

According to the embodiments of the present disclosure, the PMIs of the multiple-level component precoding matrices of the precoding matrix for the downlink data transmission may be acquired, and then the PMI of each of the multiple-level component precoding matrices may be fed back to the base station, or fed back to the base station after they are jointly encoded. As a result, it is able to support a higher codebook feedback load, thereby to meet the requirement of a 3D MIMO antenna array.

**BRIEF DESCRIPTION OF THE DRAWINGS**

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.

Fig.1 is a schematic view showing a 2D MIMO dual-polarization antenna array;

Fig.2 is a schematic view showing a 2D MIMO single-polarization antenna array;

Fig.3 is a schematic view showing a 3D MIMO dual-polarization antenna array;

Fig.4 is a schematic view showing a 3D MIMO single-polarization antenna array;

Fig.5 is a flow chart of an information feedback method according to the first embodiment of the present disclosure;

Figs.6 and 7 are flow charts of the information feedback method according to the second embodiment of the present disclosure;

Fig.8 is a schematic view showing the information feedback method according to the third embodiment of the present disclosure;

Fig.9 is a schematic view showing a first feedback situation according to the third embodiment of the present disclosure;

Fig.10 is a schematic view showing a second feedback situation according to the third embodiment of the present disclosure;

Fig.11 is a schematic view showing a third feedback situation according to the third embodiment of the present disclosure;

Fig.12 is a schematic view showing a fourth feedback situation according to the third embodiment of the present disclosure;

Fig. 13 is a schematic view showing an information feedback device according to the fourth embodiment of the present disclosure; and

Fig.14 is a schematic view showing a UE according to the fifth embodiment of the present disclosure.

**DETAILED DESCRIPTION OF THE EMBODIMENTS**

The present disclosure will be described hereinafter in conjunction with the drawings and embodiments. The following embodiments are for illustrative purposes only, but shall not be used to limit the scope of the present disclosure.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "one of" are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

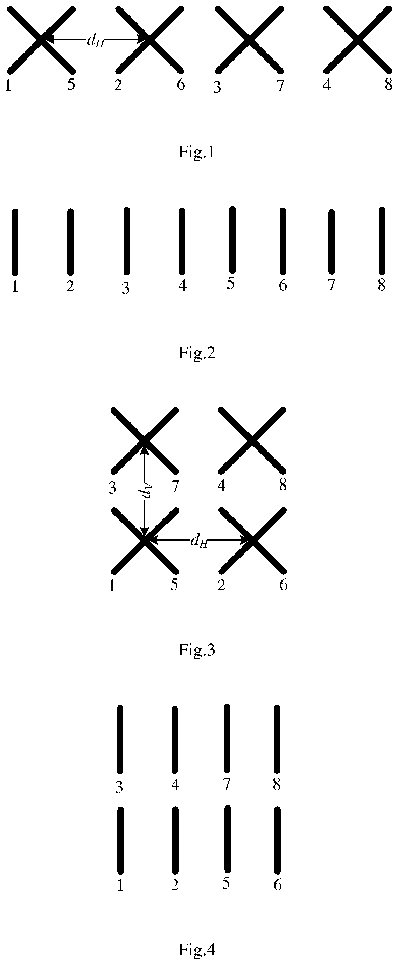

As shown in Figs.1 and 2, for a conventional 2D MIMO smart antenna array having controllable horizontal dimension antennas, there are a plurality of transmission antennae at a transmitting end and a plurality of reception antennae at a receiving end, so as to mainly acquire a multi-antenna gain by use of a spatial freedom degree in a horizontal direction. Fig.1 shows a dual-polarization antenna array arranged in the horizontal direction, and Fig.2 shows a single-polarization antenna array arranged in the horizontal direction.

A 3D MIMO technology having both controllable horizontal and vertical antennas, as a new wireless technology, has attracted more and more attentions. As shown in Figs.3 and 4, without changing an antenna size, for the 3D MIMO technology, each vertical antenna element may be divided into a plurality of elements, so as to acquire another spatial dimension, i.e., a vertical dimension. Fig.3 shows a dual-polarization antenna array arranged in both the horizontal direction and a vertical direction, and Fig.4 shows a signal-polarization antenna array arranged in both the horizontal direction and the vertical direction. It is able for the 3D MIMO technology, as a further development stage of the MIMO technology, increase an LTE transmission performance, thereby to further reduce the inter-cell interference, increase the system throughput and improve the spectral efficiency.

In a conventional cellular system, beams from the transmitting end of a base station may merely be adjusted in the horizontal direction, and it has a fixed down-tilt angle for each user in the vertical dimension. Hence, various beamforming/precoding techniques are achieved on the basis of channel information in the horizontal direction. Actually, because of a 3D channel, it is impossible for a method with the fixed down-tilt angle to acquire optimum throughput performance. Along with an increase in the number of the users in a cell, the users may be distributed at different regions of the cell, including at the center of the cell and at an edge of the cell. In the case of using a conventional 2D beamforming technology, it is merely able to differentiate the users in the horizontal direction in accordance with the channel information in the horizontal dimension, rather than to differentiate the users in the vertical dimension. As a result, the system performance may be seriously and adversely affected.

As compared with the traditional 2D MIMO technology, for the 3D MIMO technology, an additional available dimension is provided on the basis of a vertical dimension. Chanel information in this dimension may be utilized, so as to effectively inhibit inter-cell interference, thereby to increase an average throughput of an edge user or even the entire cell. For a current FDD LTE system, in order to acquire downlink CSI, a downlink reference signal, e.g., CSI-RS or CRS, needs to be used by a UE to estimate a downlink channel and feed back an RI, a PMI and a CQI to an eNB (i.e., a base station). The UE may report the CSI periodically or non-periodically. In the case of reporting the CSI periodically, the CSI may have a length not greater than 11 bits, so the CSI is reported coarsely.

For the periodic feedback in the current LTE system, 8-antennae codebooks are merely taken into consideration. As compared with the 8-antennae codebooks, the number of the 3D MIMO codebooks increases significantly. Hence, in the case of reporting the CSI, the feedback overhead for the UE increases significantly too. In other words, it is difficult for a conventional feedback mode to support the feedback of the codebooks in a larger amount. There is currently no scheme about a feedback mode with respect to the 3D MIMO codebooks in the industry.

An object of the present disclosure is to provide an information feedback method, an information feedback device and a UE, so as to support a higher codebook feedback load, thereby to meet the requirement of the 3D MIMO antenna array.

First Embodiment

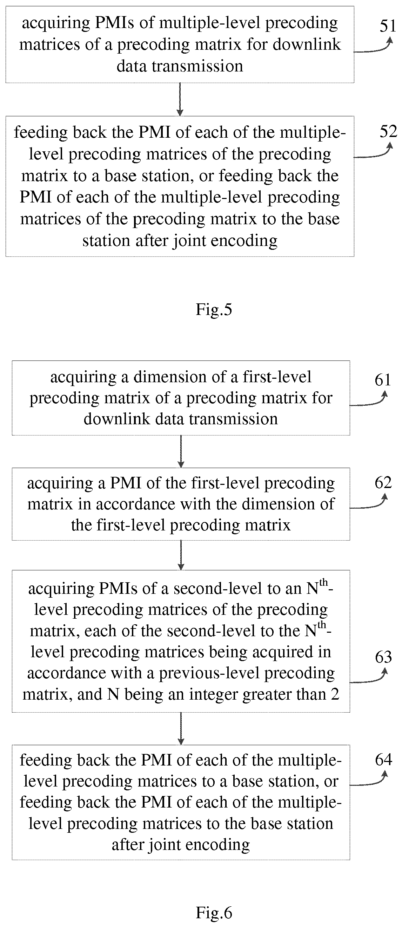

As shown in Fig.5, the present disclosure provides in this embodiment an information feedback method, which includes: Step 51 of acquiring PMIs of multiple-level component precoding matrices of a precoding matrix for downlink data transmission; and Step 52 of feeding back the PMI of each of the multiple-level component precoding matrices of the precoding matrix to a base station individually, or feeding back the jointly encoded PMIs, each of which is the PMI of each of the multiple-level component precoding matrices of the precoding matrix, to the base station.

Here, the so-called "joint encoding" refers to an encoding operation where different bit regions of the resultant information correspond to different pieces of indication information. For example, for the indication information acquired after the joint encoding, the preceding N1 bits correspond to first indication information, the N1+1 to N2 bits correspond to second indication information, and so on.

In a possible embodiment of the present disclosure, the indication information acquired after they are jointly encoded may further be used to indicate a joint state of all the indication information, i.e., the states of all the indication information may be combined and then encoded uniformly.

In this embodiment, a precoding matrix W for the downlink data transmission is acquired in accordance with multiple-levels of precoding matrices W1, W2, ...., and WN. There is a plurality of schemes for the design of a codebook of a 3D MIMO antenna array. For example, in the case that there are two levels of precoding matrices, W=W1*W2, where W represents the precoding matrix, W1 represents the first-level component precoding matrix, and W2 represents the second-level component precoding matrix.

$$W_1^{(k,l)} = \begin{bmatrix} X_H^k \otimes X_V^l & 0 \\ 0 & X_H^k \otimes X_V^l \end{bmatrix}, \quad \text{where} \quad X_H^k$$

represents a $k^{th}$-dimension precoding matrix in a horizontal dimension, and $X_V^l$ represents an $1^{th}$-dimension precoding matrix in the vertical dimension.

The precoding matrix in each dimension consists of a group of column vectors, and each column vector is generated in accordance with a Discrete Fourier Transformation (DFT) vector.

W1 is generated in accordance with two precoding matrices in the horizontal dimension and the vertical dimension, so two PMIs may be used for W1. One of the two PMIs is used to indicate the precoding matrix in the vertical dimension, and the other is used to indicate the precoding matrix in the horizontal dimension.

W2 may be used to achieve column selection, i.e., r vectors may be selected from the group of vectors in W1, where r is determined in accordance with an RI.

$$W_2^{(y)} = \begin{bmatrix} Y_1 & Y_2 & ... & Y_y \\ \phi_1 Y_1 & \phi_2 Y_2 & ... & \phi_y Y_y \end{bmatrix}, \quad \text{where} \quad \phi_l \text{ repre-}$$

sents a phase adjustment factor, and $Y_i$ represents a beam selection vector.

The UE may calculate a corresponding CQI for each code word (i.e., the precoding matrix) in accordance with a channel estimation result. After the determination of the RI and the PMI, the CQI corresponding to the code word may be fed back to the eNB too. According to the first embodiment of the present disclosure, the PMIs of the multiple-level component precoding matrices of the precoding matrix for the downlink data transmission may be acquired, and then the PMI of each of the multiple-level component precoding matrices may be fed back to the base station, or fed back to the base station after they are jointly encoded. As a result, it is able to support a higher codebook feedback load, thereby to meet the requirement of the 3D MIMO antenna array.

Second Embodiment

As shown in Fig.6, the present disclosure provides in some embodiments an information feedback method, which includes: Step 61 of acquiring a dimension indication of a first-level component precoding matrix of a precoding matrix for downlink data transmission; Step 62 of acquiring a PMI of the first-level component precoding matrix in accordance with the dimension indication of the first-level component precoding matrix; Step 63 of acquiring PMIs of a second-level to an $N^{th}$-level component precoding matrices of the precoding matrix; and Step 64 of feeding back the PMI of each of the multiple-level component precoding matrices to a base station individually, or feeding back the jointly encoded PMIs, each of which is the PMI of each of the multiple-level component precoding matrices to the base station after they are jointly encoded. Each of the second-level to the $N^{th}$-level component precoding matrices is acquired in accordance with a previous-level component precoding matrix, and N is an integer greater than 2.

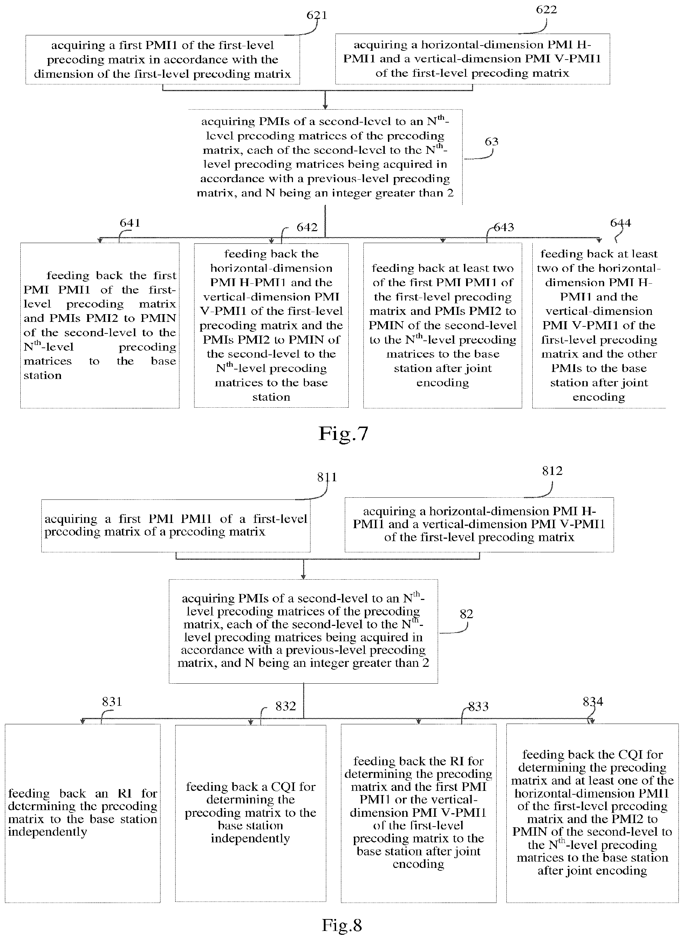

As shown in Fig.7, in the second embodiment, Step 62 may include Step 621 of acquiring a first PMI1 of the first-level component precoding matrix in accordance with the dimension indication of the first-level component precoding matrix. In the case that the first-level component precoding matrix W1 meets or does not meet a Kronecker product of the horizontal dimension and the vertical dimension (the Kronecker product is acquired in accordance with two matrices of any sizes), W1 may correspond to a PMI, i.e., the PMI1.

During the implementation, Step 62 may further include Step 622 of acquiring a horizontal-dimension PMI H-PMI1 and a vertical-dimension PMI V-PMI1 of the first-level component precoding matrix. In the case that the first-level component precoding matrix W1 meets the Kronecker product of the horizontal dimension and the vertical dimension, W1 may correspond to the horizontal-dimension PMI H-PMI1 and the vertical-dimension PMI V-PMI1.

In the case of feeding back the information independently, Step 64 may include: Step 641 of feeding back the first PMI PMI1 of the first-level component precoding matrix and PMIs PMI2 to PMIN of the second-level to the $N^{th}$-level component precoding matrices to the base station, or Step 642 of feeding back the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station.

In the case of feeding back the information jointly, Step 64 may include: Step 643 of feeding back at least two of the first PMI PMI1 of the first-level component precoding matrix and PMIs PMI2 to PMIN of the second-level to the $N^{th}$-level component precoding matrices to the base station after they are jointly encoded, or Step 644 of feeding back at least one of the horizontal-dimension PMI H-PMI1 and the vertical-dimension PMI V-PMI1 of each level component precoding matrix, that is jointly encoded with the other PMIs to the base station after they are jointly encoded.

In the case of feeding back the information after they are jointly encoded, at least two of the horizontal-dimension PMI H-PMI1 and the vertical-dimension PMI V-PMI1 of the first-level component precoding matrix and the PMIs PMI2 to PMIN of the second-level to the $N^{th}$-level component precoding matrices may be fed back to the base station after they are jointly encoded.

Third Embodiment

As shown in Fig.8, the present disclosure provides in this embodiment an information feedback method, which includes: Step 811 of acquiring a first PMI PMI1 of a first-level component precoding matrix of a precoding matrix, or Step 812 of acquiring a horizontal-dimension PMI H-PMI1 and a vertical-dimension PMI V-PMI1 of the first-level component precoding matrix; Step 82 of acquiring PMIs of a second-level to an $N^{th}$-level component precoding matrices of the precoding matrix, each of the second-level to the $N^{th}$-level component precoding matrices being acquired in accordance with a previous-level component precoding matrix, and N being an integer greater than 2; and Step 831 of feeding back an RI for determining the precoding matrix to the base station independently, or Step 832 of feeding back a CQI for determining the precoding matrix to the base station independently, or Step 833 of feeding back the RI for determining the precoding matrix that is jointly encoded with the first PMI PMI1 or the vertical-dimension PMI V-PMI1 of the first-level component precoding matrix, to the base station, or Step 834 of feeding back the CQI for determining the precoding matrix that is jointly encoded with at least one of the horizontal-dimension PMI1 of the first-level component precoding matrix and the PMI2 to PMIN of the second-level to the $N^{th}$-level component precoding matrices to the base station after they are jointly encoded.

In Steps 831, 832, 833 and 834, there is the following correspondence between feedback periods of the feedback items. A feedback period of the RI is substantially greater than or equal to a feedback period of the PMI1, the H-PMI1 or the V-PMI1, the feedback period of the PMI1 is substantially greater than or equal to a feedback period of the PMI2 to PMIN, a feedback period of the PMI2 is substantially identical to a feedback period of the CQI, and the feedback period of the V-PMI1 is substantially greater than or equal to the feedback period of the H-PMI1.

To be specific, T-RI=MRI*H*Np and T-MPI1=H*Np, where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

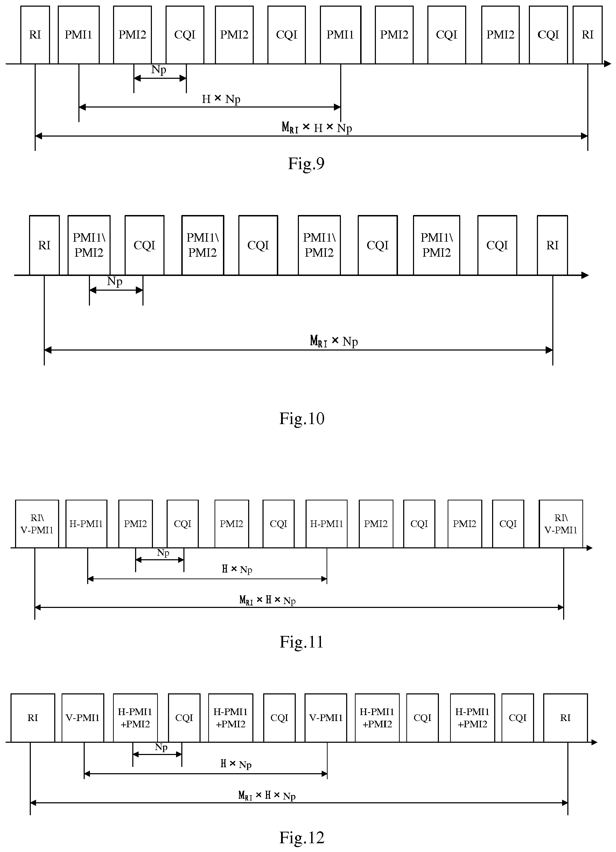

As shown in Fig.9, in the case that the precoding matrix W is acquired in accordance with two levels of precoding matrices (i.e., W1 and W2), the PMI1 and PMI2 of each of the multiple levels of precoding matrices, the RI for determining the precoding matrix that is jointly encoded with the CQI for determining the precoding matrix may be fed back to the base station independently. The feedback period of the RI is substantially greater than or equal to the feedback period of the PMI1, the feedback period of the PMI1 is substantially greater than or equal the feedback period of the PMI2, and the feedback period of the PMI2 is substantially identical to the feedback period of the CQI.

To be specific, T-PMI=H*Np, and T-RI=MRI*H*Np, where T-PMI1 represents the feedback period of the PMI1, T-PMI2 represents the feedback period of the PMI2 or the CQI, T-RI represents the feedback period of the RI, and MRI and H are both positive integers. T-PMI2/2=Np

Fig.10 shows a feedback situation where RI and CQI are fed back independently while PMI1 and PMI2 are fed back after they are jointly encoded. The feedback period of the RI is substantially greater than or equal to the feedback period of the PMI1 and the PMI2 after they are jointly encoded, and the feedback period of the PMI1 and the PMI2 after they are jointly encoded is substantially identical to the feedback period of the CQI.

To be specific, T-RI=MRI*Np, where T-RI represents the feedback period of the RI, Np represents the feedback period of the PMI1 and the PMI2 after they are jointly encoded, and MRI is a positive integer.

Fig.12 shows a feedback situation where the V-PMI1 is fed back independently while the H-PMI1 and the PMI2 are fed back after they are jointly encoded. The feedback period of the RI is substantially greater than or equal to the feedback period of the V-PMI1, the feedback period of the V-PMI1 is substantially greater than or equal to the feedback period of the H-PMI1 and the PMI2 after they are jointly encoded, and the feedback period of the H-PMI1 and the PMI2 after they are jointly encoded is substantially identical to the feedback period of the CQI.

To be specific, T1=H*Np, and T=MRI*H*Np, where T2 represents the feedback period of the RI, T1 represents the feedback period of the V-PMI1, Np represents the feedback period of the H-PMI1 and the PMI2 after they are jointly encoded, and MRI and H are both positive integers.

As shown in Fig.11, in the case that the precoding matrix W is acquired in accordance with two levels of precoding matrices (W1 and W2), the RI for determining the precoding matrix that is jointly encoded with the PMI1 or the V-PMI1 of the first-level component precoding matrix may be fed back to the base station after they are jointly encoded.

Fig.11 shows a feedback situation where RI and the V-PMI1 are fed back after they are jointly encoded while the other feedback items, i.e., the H-PMI1, the PMI2 and the CQI, are fed back independently. The feedback period of the R1 and the PMI1 or the V-PMI1 after they are jointly encoded is substantially greater than or equal to the feedback period of the H-PMI1, the feedback period of the H-PMI1 is substantially greater than or equal to the feedback period of the PMI2, and the feedback period of the PMI2 is substantially identical to the feedback period of the CQI.

To be specific, T3=H*Np and T4=MRI*H*Np, where T3 represents the feedback period of the H-PMI1, T4 represents the feedback period of the RI and the PMI1 or the V-PMI1 after they are jointly encoded, MRI and H are both positive integers, T-PMI2/2=Np, and T-PMI2 represents the feedback period of the PMI2.

For a feedback sequence, in the case that a feedback conflict occurs within a certain subframe, a feedback item having the highest feedback priority may be reserved and a feedback item having the lowest feedback priority may be abandoned. To be specific, the RI has a feedback priority level greater than the PMI1, the PMI1 has a feedback priority level greater than the PMI2 to the PMIN and greater than the CQI, and the V-PMI1 has a feedback priority level greater than the H-PMI1 and the PMI2 to the PMIN.

Here, the feedback priority level of the RI incudes a feedback priority level of the RI in the case that the RI is fed back independently or fed back after they are jointly encoded with the other CSI.

Identically, the feedback priority level of the PMI1 incudes a feedback priority level of the PMI1 in the case that the PMI1 is fed back independently or fed back after they are jointly encoded with the other CSI.

Identically, the feedback priority level of the V-PMI1 incudes a feedback priority level of the V-PMI1 in the case that the RI is fed back independently or fed back after they are jointly encoded with the other CSI.

In the case that an identical UE needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station. The first base station is a base station having an MIMO antenna array with controllable horizontal dimension antennas (i.e., a base station having a 2D MIMO antenna array), and the second base station is a base station having an MIMO antenna array with both controllable horizontal and vertical antennas (i.e., a base station having a 3D MIMO antenna array).

According to the third embodiment of the present disclosure, the PMIs of the multiple-level component precoding matrices of the precoding matrix for the downlink data transmission may be acquired, and then the PMI of each of the multiple-level component precoding matrices may be fed back to the base station, or fed back to the base station after they are jointly encoded. As a result, it is able to support a higher codebook feedback load, thereby to meet the requirement of the 3D MIMO antenna array.

Fourth Embodiment

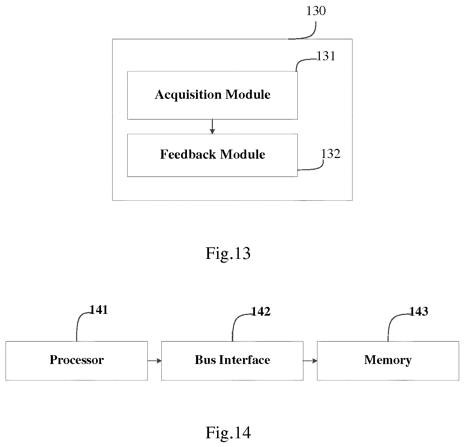

As shown in Fig.13, the present disclosure provides in this embodiment an information feedback device 130, which includes: an acquisition module 131 configured to acquire PMIs of multiple-level component precoding matrices of a precoding matrix for downlink data transmission; and a feedback module 132 configured to feed back the PMI of each of the multiple-level component precoding matrices of the precoding matrix to a base station, or feed back the PMI of each of the multiple-level component precoding matrices of the precoding matrix, to the base station.

In a possible embodiment of the present disclosure, the acquisition module 131 includes: a first acquisition unit configured to acquire a dimension indication of a first-level component precoding matrix of the precoding matrix for the downlink data transmission; a second acquisition unit configured to acquire the PMI of the first-level component precoding matrix in accordance with the dimension indication of the first-level component precoding matrix; and a third acquisition unit configured to acquire the PMIs of a second-level to an $N^{th}$-level component precoding matrices of the precoding matrix. Each of the second-level to the $N^{th}$-level component precoding matrices is acquired in accordance with a previous-level component precoding matrix, and N is an integer greater than 2.

In a possible embodiment of the present disclosure, the second acquisition unit is further configured to acquire a first PMI PMI1 of the first-level component precoding matrix, or acquire a horizontal-dimension PMI H-PMI1 and a vertical-dimension PMI V-PMI1 of the first-level component precoding matrix.

In a possible embodiment of the present disclosure, the feedback module 132 includes: a first independent feedback unit configured to feed back the first PMI PMI1 of the first-level component precoding matrix and PMIs PMI2 to PMIN of the second-level to the $N^{th}$-level component precoding matrices to the base station, or feed back the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station; or a first joint feedback unit configured to feed back at least two of the first PMI PMI1 of the first-level component precoding matrix and PMIs PMI2 to PMIN of the second-level to the $N^{th}$-level component precoding matrices to the base station after they are jointly encoded, or feed back at least one of the horizontal-dimension PMI H-PMI and the vertical-dimension PMI V-PMI of each level component precoding matrix, along with the PMIs PMI2 to PMIN of the other level component precoding matrices to the base station after they are jointly encoded. For example, the first joint feedback unit may be configured to feed back at least least two of the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station after they are jointly encoded.

In a possible embodiment of the present disclosure, the feedback module 132 further includes: a second independent feedback unit configured to feed back an RI for determining the precoding matrix to the base station independently, or feed back a CQI for determining the precoding matrix to the base station independently; or a second joint feedback unit configured to feed back the RI for determining the precoding matrix that is jointly encoded with the first PMI PMI1 or the vertical-dimension PMI V-PMI1 of the first-level component precoding matrix, to the base station, or feed back the CQI for determining the precoding matrix that is jointly encoded with at least one of the horizontal-dimension PMI1 of the first-level component precoding matrix and the PMI2 to PMIN of the second-level to the $N^{th}$-level component precoding matrices to the base station after they are jointly encoded.

A feedback period of the RI is substantially greater than or equal to a feedback period of the PMI1, the H-PMI1 or the V-PMI1, the feedback period of the PMI1 is substantially greater than or equal to a feedback period of the PMI2 to PMIN, a feedback period of the PMI2 is substantially identical to a feedback period of the CQI, and the feedback period of the V-PMI1 is substantially greater than or equal to the feedback period of the H-PMI1.

To be specific, T-RI=MRI*H*Np and T-MPI1=H*Np, where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

In a possible embodiment of the present disclosure, the RI has a feedback priority level greater than the PMI1, the PMI1 has a feedback priority level greater than the PMI2 to the PMIN and greater than the CQI, and the V-PMI1 has a feedback priority level greater than the H-PMI1 and the PMI2 to the PMIN.

In a possible embodiment of the present disclosure, in the case that an identical UE needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station. The first base station is a base station having an MIMO antenna array with controllable horizontal dimension antennas, and the second base station is a base station having an MIMO antenna array with both controllable horizontal and vertical antennas.

It should be appreciated that, the information feedback device corresponds to the above-mentioned method. All the implementation modes in the above method embodiments may be applied to the information feedback device, with a substantially identical technical effect.

Fifth Embodiment

As shown in Fig.14, the present disclosure provides in this embodiment a UE, which includes a processor 141 and a memory 143 connected to the processor via a bus interface 142 and configured to store therein programs and data for the operation of the processor 141. The processor is configured to call and execute the programs and data stored in the memory, so as to: acquire PMIs of multiple-level component precoding matrices of a precoding matrix for downlink data transmission; and feed back the PMI of each of the multiple-level component precoding matrices of the precoding matrix to a base station, or feed back the PMI of each of the multiple-level component precoding matrices of the precoding matrix, to the base station. The processor is further configured to achieve functions of any other module of the information feedback device.

It should be appreciated that, all or parts of the above-mentioned steps may be implemented through hardware or a computer program. The computer program includes instructions for executing parts of or all of the steps in the above-mentioned method. In addition, the computer program may be stored in a computer-readable storage medium in any form.

The above are merely the preferred embodiments of the present disclosure, but the present disclosure is not limited thereto. Obviously, a person skilled in the art may make further modifications and improvements without departing from the spirit of the present disclosure, and these modifications and improvements shall also fall within the scope of the present disclosure.

**Claims**

1. An information feedback method, comprising steps of:

   acquiring Precoding Matrix Indicators (PMIs) of multiple-level component precoding matrices of a precoding matrix for downlink data transmission; and
   feeding back the PMI of each of the multiple-level component precoding matrices of the precoding matrix to a base station individually, or feeding back the jointly encoded PMIs, each of which is the PMI of each of the multiple-level component precoding matrices of the precoding matrix, to the base station.

2. The information feedback method according to claim 1, wherein the step of acquiring the PMIs of the multiple-level component precoding matrices of the precoding matrix for the downlink data transmission comprises:

   acquiring a dimension indication of a first-level component precoding matrix of the precoding matrix for the downlink data transmission;
   acquiring the PMI of the first-level component precoding matrix in accordance with the dimension indication of the first-level component precoding matrix; and
   acquiring the PMIs of a second-level to an $N^{th}$-level component precoding matrices of the precoding matrix,
wherein each of the second-level to the $N^{th}$-level component precoding matrices is acquired in accordance with a previous-level component precoding matrix, and N is an integer greater than 2.

3. The information feedback method according to claim 2, wherein the step of acquiring the PMI of the first-level component precoding matrix in accordance with the dimension indication of the first-level component precoding matrix comprises
acquiring a first PMI PMI1 of the first-level component precoding matrix, or
acquiring a horizontal-dimension PMI H-PMI1 and a vertical-dimension PMI V-PMI1 of the first-level component precoding matrix.

4. The information feedback method according to any one of claims 1 to 3, wherein the step of feeding back the PMI of each of the multiple-level component precoding matrices of the precoding matrix, to the base station comprises
feeding back at least one of a horizontal-dimension PMI and a vertical-dimension PMI of each of the multiple-level component precoding matrices, that is jointly encoded with the other PMI to the base station after they are jointly encoded.

5. The information feedback method according to any one of claims 1 to 3, wherein the step of feeding back the PMI of each of the multiple-level component precoding matrices to the base station or feeding back the PMI of each of the multiple-level component precoding matrices to the base station after they are jointly encoded comprises:

    feeding back independently the first PMI PMI1 of the first-level component precoding matrix and PMIs PMI2 to PMIN of the second-level to the $N^{th}$-level component precoding matrices to the base station, or
    feeding back independently the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station, or
    feeding back at least two of the first PMI PMI1 of the first-level component precoding matrix and PMIs PMI2 to PMIN of the second-level to the $N^{th}$-level component precoding matrices to the base station after they are jointly encoded, or
    feeding back at least two of the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station after they are jointly encoded.

6. The information feedback method according to claim 5, further comprising:

    feeding back a Rank Indicator (RI) for determining the precoding matrix to the base station independently, or
    feeding back a Channel Quality Indicator (CQI) for determining the precoding matrix to the base station independently, or
    feeding back the RI for determining the precoding matrix that is jointly encoded with one of the first PMI PMI1 and the vertical-dimension PMI V-PMI1 of the first-level component precoding matrix, to the base station, or
    feeding back the CQI for determining the precoding matrix that is jointly encoded with at least one of the H-PMI1 and the PMI2 to PMIN to the base station after they are jointly encoded.

7. The information feedback method according to claim 6, wherein
a feedback period of the RI is substantially greater than or equal to a feedback period of the PMI1, the H-PMI1 or the V-PMI1,
the feedback period of the PMI1 is substantially greater than or equal to a feedback period of the PMI2 to PMIN,
a feedback period of the PMI2 is substantially identical to a feedback period of the CQI, and
the feedback period of the V-PMI1 is substantially greater than or equal to the feedback period of the H-PMI1.

8. The information feedback method according to claim 7, wherein
T-RI=MRI*H*Np and T-MPI1=H*Np,
where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

9. The information feedback method according to claim 6, wherein
the RI has a feedback priority level greater than the PMI1,
the PMI1 has a feedback priority level greater than the PMI2 to the PMIN and greater than the CQI, and the V-PMI1 has a feedback priority level greater than the H-PMI1 and the PMI2 to the PMIN.

10. The information feedback method according to claim 6, wherein in the case that an identical User Equipment (UE) needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station,

wherein the first base station is a base station having a Multiple-Input Multiple-Output (MIMO) antenna array with controllable horizontal dimension antennas, and the second base station is a base station having an MIMO antenna array with both controllable horizontal and vertical antennas.

11. An information feedback device, comprising:

an acquisition module configured to acquire Precoding Matrix Indicators (PMIs) of multiple-level component precoding matrices of a precoding matrix for downlink data transmission; and a feedback module configured to feed back the PMI of each of the multiple-level component precoding matrices of the precoding matrix to a base station, or feed back the PMI of each of the multiple-level component precoding matrices of the precoding matrix, to the base station.

12. The information feedback device according to claim 11, wherein the acquisition module comprises:

a first acquisition unit configured to acquire a dimension indication of a first-level component precoding matrix of the precoding matrix for the downlink data transmission; a second acquisition unit configured to acquire the PMI of the first-level component precoding matrix in accordance with the dimension indication of the first-level component precoding matrix; and a third acquisition unit configured to acquire the PMIs of a second-level to an $N^{th}$-level component precoding matrices of the precoding matrix, wherein each of the second-level to the $N^{th}$-level component precoding matrices is acquired in accordance with a previous-level component precoding matrix, and N is an integer greater than 2.

13. The information feedback device according to claim 12, wherein the second acquisition unit is further configured to acquire a first PMI PMI1 of the first-level component precoding matrix, or acquire a horizontal-dimension PMI H-PMI1 and a vertical-dimension PMI V-PMI1 of the first-level component precoding matrix.

14. The information feedback device according to any one of claims 11 to 13, wherein the feedback module is further configured to feed back at least one of a horizontal-dimension PMI and a vertical-dimension PMI of each of the multiple-level component precoding matrices that is jointly encoded with the other PMI to the base station after they are jointly encoded.

15. The information feedback device according to any one of claims 11 to 13, wherein the feedback module comprises:

a first independent feedback unit configured to feed back independently the first PMI PMI1 of the first-level component precoding matrix and PMIs PMI2 to PMIN of the second-level to the $N^{th}$-level component precoding matrices to the base station, or feed back independently the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station; or a first joint feedback unit configured to feed back at least two of the first PMI PMI1 of the first-level component precoding matrix and PMIs PMI2 to PMIN of the second-level to the $N^{th}$-level component precoding matrices to the base station after they are jointly encoded, or feed back at least two of the horizontal-dimension PMI H-PMI1 and the vertical-dimension PMI V-PMI1 of the first-level component precoding matrix and the PMIs PMI2 to PMIN of the second-level to the $N^{th}$-level component precoding matrices to the base station after they are jointly encoded.

16. The information feedback device according to claim 15, wherein the feedback module further comprises:

a second independent feedback unit configured to feed back a Rank Indicator (RI) for determining the precoding matrix to the base station independently, or feed back a Channel Quality Indicator (CQI) for determining the precoding matrix to the base station independently; or

a second joint feedback unit configured to feed back the RI for determining the precoding matrix that is jointly encoded with one of the first PMI PMI1 and the vertical-dimension PMI V-PMI1 of the first-level component precoding matrix, to the base station, or feed back the CQI for determining the precoding matrix that is jointly encoded with at least one of the H- PMI1 of the first-level component precoding matrix and the PMI2 to PMIN of the second-level to the $N^{th}$-level component precoding matrices to the base station after they are jointly encoded.

17. The information feedback device according to claim 16, wherein a feedback period of the RI is substantially greater than or equal to a feedback period of the PMI1, the H-PMI1 or the V-PMI1, the feedback period of the PMI1 is substantially greater than or equal to a feedback period of the PMI2 to PMIN, a feedback period of the PMI2 is substantially identical to a feedback period of the CQI, and the feedback period of the V-PMI1 is substantially greater than or equal to the feedback period of the H-PMI1.

18. The information feedback device according to claim 17, wherein T-RI=MRI\*H\*Np and T-MPI1=H\*Np, where T-PMI1 represents a feedback period of the PMI1 or a feedback period of the PMI1 jointly encoded with any other feedback item, the other feedback item has a feedback period substantially smaller than the feedback period of the PMI1 in the case that the PMI1 is fed back independently, T-PMI2 represents a feedback period of the PMI2 or CQI, Np=T-PMI2/2, T-RI represents a feedback period of the RI or a feedback period of the RI jointly encoded with any other feedback item, the other feedback item has a feedback period substantially smaller than the feedback period of the RI, and MRI and H are both positive integers.

19. The information feedback device according to claim 16, wherein the RI has a feedback priority level greater than the PMI1, the PMI1 has a feedback priority level greater than the PMI2 to the PMIN and greater than the CQI, and the V-PMI1 has a feedback priority level greater than the H-PMI1 and the PMI2 to the PMIN.

20. The information feedback device according to claim 16, wherein in the case that an identical User Equipment (UE) needs to feed back information to two base stations simultaneously, a first RI fed back to a first base station has a feedback priority level greater than a second RI fed back to a second base station, the second RI has a feedback priority level greater than the PMI1 fed back to the first base station, the PMI1 fed back to the first base station has a feedback priority level greater than the PMI1 fed back to the second base station, the PMI1 fed back to the second base station has a feedback priority level greater than the PMI2 fed back to the first base station and a first CQI fed back to the first base station, the V-PMI1 fed back to the second base station has a feedback priority level greater than the PMI1 fed back to the first base station, and the PMI1 fed back to the first base station has a feedback priority level greater than the H-PMI1 fed back to the second base station and the PMI2 fed back to the second base station,

wherein the first base station is a base station having a Multiple-Input Multiple-Output (MIMO) antenna array with controllable horizontal dimension antennas, and the second base station is a base station having an MIMO antenna array with both controllable horizontal and vertical antennas.

21. A User Equipment (UE), comprising a processor and a memory connected to the processor via a bus interface and configured to store therein programs and data for the operation of the processor, wherein the processor is configured to call and execute the programs and data stored in the memory, so as to: acquire Precoding Matrix Indicators (PMIs) of multiple-level component precoding matrices of a precoding matrix for downlink data transmission; and feed back the PMI of each of the multiple-level component precoding matrices of the precoding matrix to a base station, or feed back the PMI of each of the multiple-level component precoding matrices of the precoding matrix, to the base station.

Fig.1

Fig.2

Fig.3

Fig.4

acquiring PMIs of multiple-level precoding matrices of a precoding matrix for downlink data transmission    51

feeding back the PMI of each of the multiple-level precoding matrices of the precoding matrix to a base station, or feeding back the PMI of each of the multiple-level precoding matrices of the precoding matrix to the base station after joint encoding    52

Fig.5

acquiring a dimension of a first-level precoding matrix of a precoding matrix for downlink data transmission    61

acquiring a PMI of the first-level precoding matrix in accordance with the dimension of the first-level precoding matrix    62

acquiring PMIs of a second-level to an $N^{th}$-level precoding matrices of the precoding matrix, each of the second-level to the $N^{th}$-level precoding matrices being acquired in accordance with a previous-level precoding matrix, and N being an integer greater than 2    63

feeding back the PMI of each of the multiple-level precoding matrices to a base station, or feeding back the PMI of each of the multiple-level precoding matrices to the base station after joint encoding    64

Fig.6

621

acquiring a first PMI1 of the first-level precoding matrix in accordance with the dimension of the first-level precoding matrix

622

acquiring a horizontal-dimension PMI H-PMI1 and a vertical-dimension PMI V-PMI1 of the first-level precoding matrix

acquiring PMIs of a second-level to an $N^{th}$-level precoding matrices of the precoding matrix, each of the second-level to the $N^{th}$-level precoding matrices being acquired in accordance with a previous-level precoding matrix, and N being an integer greater than 2

63

641

feeding back the first PMI PMI1 of the first-level precoding matrix and PMIs PMI2 to PMIN of the second-level to the $N^{th}$-level precoding matrices to the base station

642

feeding back the horizontal-dimension PMI H-PMI1 and the vertical-dimension PMI V-PMI1 of the first-level precoding matrix and the PMIs PMI2 to PMIN of the second-level to the $N^{th}$-level precoding matrices to the base station

643

feeding back at least two of the first PMI PMI1 of the first-level precoding matrix and PMIs PMI2 to PMIN of the second-level to the $N^{th}$-level precoding matrices to the base station after joint encoding

644

feeding back at least two of the horizontal-dimension PMI H-PMI1 and the vertical-dimension PMI V-PMI1 of the first-level precoding matrix and the other PMIs to the base station after joint encoding

Fig.7

811

acquiring a first PMI PMI1 of a first-level precoding matrix of a precoding matrix

812

acquiring a horizontal-dimension PMI H-PMI1 and a vertical-dimension PMI V-PMI1 of the first-level precoding matrix

acquiring PMIs of a second-level to an $N^{th}$-level precoding matrices of the precoding matrix, each of the second-level to the $N^{th}$-level precoding matrices being acquired in accordance with a previous-level precoding matrix, and N being an integer greater than 2

82

831

feeding back an RI for determining the precoding matrix to the base station independently

832

feeding back a CQI for determining the precoding matrix to the base station independently

833

feeding back the RI for determining the precoding matrix and the first PMI PMI1 or the vertical-dimension PMI V-PMI1 of the first-level precoding matrix to the base station after joint encoding

834

feeding back the CQI for determining the precoding matrix and at least one of the horizontal-dimension PMI1 of the first-level precoding matrix and the PMI2 to PMIN of the second-level to the $N^{th}$-level precoding matrices to the base station after joint encoding

Fig.8

| RI | PMI1 | PMI2 | CQI | PMI2 | CQI | PMI1 | PMI2 | CQI | PMI2 | CQI | RI |
|----|------|------|-----|------|-----|------|------|-----|------|-----|-----|

$Np$

$H \times Np$

$M_{RI} \times H \times Np$

Fig.9

| RI | PMI1\PMI2 | CQI | PMI1\PMI2 | CQI | PMI1\PMI2 | CQI | PMI1\PMI2 | CQI | RI |
|----|-----------|-----|-----------|-----|-----------|-----|-----------|-----|-----|

$Np$

$M_{RI} \times Np$

Fig.10

| RI\V-PMI1 | H-PMI1 | PMI2 | CQI | PMI2 | CQI | H-PMI1 | PMI2 | CQI | PMI2 | CQI | RI\V-PMI1 |
|-----------|--------|------|-----|------|-----|--------|------|-----|------|-----|-----------|

$Np$

$H \times Np$

$M_{RI} \times H \times Np$

Fig.11

| RI | V-PMI1 | H-PMI1+PMI2 | CQI | H-PMI1+PMI2 | CQI | V-PMI1 | H-PMI1+PMI2 | CQI | H-PMI1+PMI2 | CQI | RI |
|----|--------|-------------|-----|-------------|-----|--------|-------------|-----|-------------|-----|-----|

$Np$

$H \times Np$

$M_{RI} \times H \times Np$

Fig.12

130

131

**Acquisition Module**

**Feedback Module**

132

Fig.13

141

142

143

**Processor**

**Bus Interface**

**Memory**

Fig.14

# INTERNATIONAL SEARCH REPORT

International application No.

**PCT/CN2016/089416**

## A. CLASSIFICATION OF SUBJECT MATTER

H04B 7/06 (2006.01) i; H04L 1/06 (2006.01) i

According to International Patent Classification (IPC) or to both national classification and IPC

## B. FIELDS SEARCHED

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 3D MIMO, PMI, precoding matrix index, codebook, multilevel, alone, independent, joint

encode, dimension, overhead, drop, low, reduce, precod+ matrix indicator, multiple, joint, encod+, feedback, horizontal, vertical

## C. DOCUMENTS CONSIDERED TO BE RELEVANT

| Category* | Citation of document, with indication, where appropriate, of the relevant passages | Relevant to claim No. |
|---|---|---|
| X | CN 104184560 A (ZTE CORP.), 03 December 2014 (03.12.2014), description, paragraphs [0356]-[0390], and figure 3 | 1, 11, 21 |
| A | CN 103873197 A (CHONGQING UNIVERSITY OF POSTS AND TELECOMMUNICATIONS), 18 June 2014 (18.06.2014), the whole document | 1-21 |
| A | CN 102387006 A (SHARP KABUSHIKI KAISHA), 21 March 2012 (21.03.2012), the whole document | 1-21 |
| A | WO 2014129858 A1 (LG ELECTRONICS INC.), 28 August 2014 (28.08.2014), the whole document | 1-21 |
| A | WO 2015020373 A1 (LG ELECTRONICS INC.), 12 February 2015 (12.02.2015), the whole document | 1-21 |
| A | TEXAS INSTRUMENTS., "Progressing on CSI Feedback for Rel.10 Downlink MIMO" 3GPP TSG RAN WG1 62 R1-104475, 27 August 2010 (27.08.2010), pages 1-4 | 1-21 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 September 2016 (05.09.2016) | **13 October 2016 (13.10.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Wenjuan** Telephone No.: (86-10) **62413337** |
|---|---|

Form PCT/ISA/210 (second sheet) (July 2009)

## INTERNATIONAL SEARCH REPORT
### Information on patent family members

| | International application No. |
|---|---|
| | **PCT/CN2016/089416** |

| Patent Documents referred in the Report | Publication Date | Patent Family | Publication Date |
|---|---|---|---|
| CN 104184560 A | 03 December 2014 | WO 2014187146 A1 | 27 November 2014 |
| | | KR 20160013515 A | 04 February 2016 |
| | | MX 2015009961 A | 29 September 2015 |
| | | JP 2016511571 A | 14 April 2016 |
| | | EP 2955869 A1 | 16 December 2015 |
| | | CA 2899660 A1 | 27 November 2014 |
| | | AU 2014271098 A1 | 06 August 2015 |
| | | US 2016065289 A1 | 03 March 2016 |
| CN 103873197 A | 18 June 2014 | None | |
| CN 102387006 A | 21 March 2012 | None | |
| WO 2014129858 A1 | 28 August 2014 | JP 2016513430 A | 12 May 2016 |
| | | EP 2961216 A1 | 30 December 2015 |
| | | US 2015341092 A1 | 26 November 2015 |
| | | KR 20150105632 A | 17 September 2015 |
| | | CN 105009626 A | 28 October 2015 |
| WO 2015020373 A1 | 12 February 2015 | US 2016080065 A1 | 17 March 2016 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510501769